# EUROPÄISCHE PATENTSCHRIFT

(11) **EP 1 911 304 B1**
(45) Veröffentlichungstag und Bekanntmachung des Hinweises auf die Patenterteilung: **17.03.2010**
(21) Anmeldenummer: 06776540.4
(22) Anmeldetag: 01.08.2006
(51) Int. Cl.: H04W 4/10

(54) **VERFAHREN ZUR ERWEITERUNG DES KOMMUNIKATIONSDIENSTES PUSH TO TALK**
METHOD FOR EXTENDING A PUSH TO TALK COMMUNICATION SERVICE
PROCEDE POUR ETENDRE LE SERVICE DE COMMUNICATION PUSH TO TALK (MESSAGERIE VOCALE INSTANTANEE)

(30) Priorität: 04.08.2005 DE 102005037317; 29.11.2005 DE 102005057235
(43) Veröffentlichungstag der Anmeldung: 16.04.2008
(73) Patentinhaber: T-Mobile International AG, 53227 Bonn (DE)
(72) Erfinder: BLICKER, Stephan, 53343 Wachtberg-Villip (DE)
(74) Vertreter: Riebling, Peter
(86) Internationale Anmeldenummer: PCT/EP2006/007599
(87) Internationale Veröffentlichungsnummer: WO 2007/014750

(56) Entgegenhaltungen:
- WO-A-2004/028112
- WO-A-2004/086715
- WO-A-2004/105413
- WO-A2-2004/100419
- US-A1- 2004 219 925
- "Push to Talk over Cellular Requirements Version 1.0 - 29 Mar2005, Open Mobile Alliance OMA-RD-PoC-V1_0-20050329-C" OMA OPEN MOBILE ALLIANCE, [Online] 29. März 2005 (2005-03-29), Seiten 1-77, XP002361877 Gefunden im Internet: URL:http://www.openmobilealliance.org> [gefunden am 2006-10-13]
- "Push to talk over Cellular (PoC) - Architecture, Candidate Version 1.0 - 28 April 2005, Open Mobile Alliance OMA-AD_PoC-V1_0-20050428-C" OMA OPEN MOBILE ALLIANCE, [Online] 28. April 2005 (2005-04-28), Seiten 1-156, XP002361876 Gefunden im Internet: URL:http://www.openmobilealliance.org> [gefunden am 2006-10-13]

## Beschreibung

Die Erfindung betrifft ein Verfahren und ein System zur Erweiterung des bekannten Kommunikationsdienstes Push to Talk zwecks neuer Einsatzmöglichkeiten.

Der Push-to-Talk-Dienst ist schon in manchen Mobilkommunikationsnetzen verfügbar. Er liefert die Möglichkeit, das Mobiltelefon als Walkie-Talkie zu benutzen. Der Dienst ist charakterisiert durch eine Halbduplex-Voice-over-IP-Anwendung unter Verwendung des RTP Protokolls (Real-Time Transport Protocol) zum Transport der Sprachbestandteile.

Aber der Push-to-Talk-Dienst bietet zusätzliche Fähigkeiten d.h. an, z.B.:
- Gruppen-bezogene Übertragung (der 1-zu-viele Kommunikationstyp basiert auf vordefinierten oder ad hoc definierten oder Chatgruppen)
- Quasi-Präsenzinformation aufgrund der Tatsache dass der Push-to-Talk-Server weiß, welches MSISDN sich der bestimmten Gruppe anschloss.

Diese Funktionen sind eingeführt und Stand der Technik.

Aus den Veröffentlichungen WO2004/028112 A1, WO 2004/086715 A1, WO 2004/100419 A2 oder WO 2004/219925 A1 sind Verfahren zur Verwendung von Push-to-Talk-Technik bekannt, bei denen sowohl Sprache als auch Daten zwischen den Teilnehmern einer Push-to-Talk-Gruppe ausgetauscht, d.h. gesendet und empfangen werden können.
Ein Nachteil der bekannten Verfahren zur Verwendung von Push-to-Talk

Technik ist für eine Netzbetreiber-Domain ist, dass die Teilnehmer und Diensteverwaltung der Netzbetreiber-Domain nur auf den Netzbetreiber beschränkt ist, so dass das Diensteangebot auf die vom Netzbetreiber angebotenen Dienste beschränkt ist.

Die Spezifikation "Push to Talk over Cellular Requirements Version 1.0 - 29 March 2005, Open Mobile Alliance, XP002361877, Seiten 1-77, gibt einen allgemeinen Überblick über die Anforderungen an einen Push to Talk Dienst.

Es ist die Aufgabe der Erfindung, ein Verfahren und System zur realisieren, das eine Erweiterung des Push to Talk Dienstes vorsieht, so dass dem Mobilfunkteilnehmer eine größere Auswahl von Diensten angeboten werden kann.

Diese Aufgabe wird erfindungsgemäß durch die Merkmale der unabhängigen Ansprüche gelöst.

Bevorzugte Ausgestaltungen der Erfindung sind in den abhängigen Ansprüchen angegeben.

Heutige Push to Talk Systeme bieten Sprachübertragung an. Die Übertragung von Sprache ist aber nur eine denkbare Anwendungsform von Push To Talk. Man kann aber genauso gut mehr als nur Sprache in einer Nachricht übertragen, wie z.B. Bilder, Musik, Dateien, Videos. Die Erfindung beschreibt einen Vorgang bzw. Verfahren, um externe Firmen an das Push to Talk System anzubinden, Kundensubskriptionen durchzuführen in Abhängigkeit von Mediendaten, die in über Push to Talk übertragen werden. Sie beschreibt die zusätzlichen Funktionalitäten, die in den existierenden Systemen gebraucht werden hinsichtlich Netz und mobilem Terminal. Der entscheidende Vorteil dieses neuen Verfahrens ist, dass Push to Talk als Übertragungskanal verwendet wird für alle Arten von Halbduplex-Kommunikation mit unterschiedlichen Medien. Die Erfindung beschreibt zudem konkrete Anwendungsfälle, wie sie von externen Serviceprovidern angeboten werden könnten.

Die Erfindung beschreibt einen Ermöglichungsdienst Push To Talk - Vorgehen/Verfahren zur Nachrichtenmittlung an Dritte unter Verwendung des Push-to-talk over Cellular als Träger. Ferner ein Verfahren/Vorgehen, um Push-to-Talk als einen Ermöglichungsdienst für Einwähl-Kommunikationsanwendungen für Dritte zu verwenden.

Das Verfahren zur Verwendung des Dienstes Push to Talk wird erfindungsgemäß so erweitert, dass die Erweiterung als Ermöglichungsdienst für multimediale Chat-Anwendungen für Dritte genutzt werden kann. Dabei wird die Gruppenfunktionalität der mobilfunkspezifischen Push-to-Talk-Funktionalität PoC verwendet.

Die Dienste-Idee "Online Benachrichtigung für Dritte" ist auf allen PoC-Fähigkeiten aufgebaut unter Verwendung dieser Verfahren, aber unter Bereitstellung zusätzlicher Verfahren:
- Bereitstellung von Infrastruktur für Herunterlade-Medien, wie Text, Sprache, Bild.
- Fähigkeit um Medien, z.B. jpg, gif, mid, mpg..., zu übertragen, anders als Nur-Sprachsignale.
- Anbieten von Infrastruktur vom Netzbetreiber an Dritte wie UNTERNEHMEN 1, UNTERNEHMEN 2 usw., um den Verkehr auf den eigenen Zugangsnetzen des Netzwerkbetreibers zu steigern.

Der Vorgang/das Verfahren zur Verwendung des PoC als Ermöglichungs-System bzw. Dienste-Idee für eine "Online Benachrichtigung für Dritte" und Online-Herunterladen für Dritte als Beispielsdienst für generischen Gebrauch von PoC als Ermöglichungsplattform für das Übertragen von Daten innerhalb von Gruppen.
1) Der Netzbetreiber bietet einem Dritten, wie z.B. dem UNTERNEHMEN 1, Verfahren/Funktionen an, um Online-Nachrichten zu den Kunden aufzufangen, die sich entsprechenden PoC Gruppen, sogenannten Join-in Gruppen, anschlossen haben.
2) Der Netzbetreiber bietet Mittel an, um die Büroanwendungen des Dritten mittels PoC-Gruppenmanagementfunktionen zu synchronisieren.
3) Der Netzbetreiber bietet Dritten, wie z.B. einem Serviceprovider wie UNTERNEHMEN 2, Verfahren an, um eigene Chatgruppen zu schaffen, basierend auf der UNTERNEHMEN 2 - Suskriptionsbasis. Auf diese Weise ist UNTERNEHMEN 2 verantwortlich dafür, bestimmten MSISDNs zu erlauben, auf bestimmte Join-in Gruppen zuzugreifen, die von dem Netzbetreiber bewirtet werden.
4) Der Netzbetreiber bietet Dritten, z.B. einem Serviceprovider wie UNTERNEHMEN 2, Verfahren an, um Medien vom festen Netz zu denjenigen Mobiltelefonen im "Push" Verfahren zu übertragen, die sich den Chatgruppen anschlossen.

### Dienstebeispiel 1: Anwendungen eines Dritten: Online Benachrichtigung

1) UNTERNEHMEN 1 möchte Leute erreichen, die auf Geschäftsreisen sind. Sie stellen eine Anschließ-Chatgruppe für diese Leute bereit. Die Gruppe der Geschäftsreisenden ist ebenso z.B. in einer Outlook Verteilerliste gespeichert.
2) Die Verteilerliste ist synchron mit dem PoC-Gruppenlistenmanagementsystem und benutzt eine spezielle Schnittstelle zwischen den Büroanwendungen des Dritten und dem PoC-Gruppenlistenmanagementsystem des Netzwerkbetreibers.
3) Geschäftsreisende von UNTERNEHMEN 1 treten in die Gruppe ein.
4) "Online-Nachrichten" werden über den PoC-Träger gesendet. Kunden des UNTERNEHMENs 1 müssen nicht eine andere Anwendung starten als PoC. Sie brauchen keinen zusätzlichen POP3-Klienten zu starten, sondern können einfach den vorhandenen PoC-Klienten verwenden.

### Dienstebeispiel 2: Anwendungs-Herunterlade-Chat eines Dritten

1) Das UNTERNEHMEN 2 bietet eine Website für Klingeltöne an. In dieser Website erwähnt es Anschließ-Chatgruppen für die Netzbetreibereigenen Push-to-talk basiert auf Kategorisierungen und Interessen.
2) Die Kunden subskribieren Chatgruppen basierend auf Kategorisierung und Interessen unter Verwendung der Absatzkanäle des UNTERNEHMENs 2 (Website, Anrufzentrum...) UNTERNEHMEN 2 subskribiert die Kunden.
3) Die Kunden treten in die Gruppen basierend auf Kategorisierungen und Interessen ein, die von dem Netzbetreiber bewirtet (gehostet) werden.
4) Die Kunden erhalten Medien von UNTERNEHMEN 2. UNTERNEHMEN 2 verwendet Push-to-talk, um Medien zu versenden, basiert auf Gruppen-Kategorisierung und Interessen. Dienstebeispiel 3: Dritten-Anwendung: Medienvertrieb, ähnlich "peer-topeer"

1) Der Dritte bietet eine Chatgruppe für Medienvertrieb an
2) Die Kunden subskribieren und schließen sich der Medien-Vertriebsgruppe an
3) Die Kunden drücken den Push-to-Talk-Knopf und übertragen Medien zu anderen Teilnehmern ganz gleich um welche Art von Medien (gif, Sprache, wav, usw.) es sich handelt. Der Kunde muss aufzeigen welche Art von Medien er senden und erhalten möchte. Dieses ist eine neue Funktionalität. Vielleicht muss der Benutzer der Gruppe verschiedene Arten von Medien subskribieren. Die Subskribierung für neue Medien ist ebenfalls neu.

### Vorteile für Netzbetreiber und Kunden:

a) Mobile Kunden, die in die Gruppen eintraten, müssen an die Netzbetreiber für das Eintreten in die Gruppen bezahlen, (Zahlung über Standard-tägliche Benutzungsgebühr oder monatliche Benutzungsgebühr). Also verdient der Netzbetreiber Geld für den klassischen "Transport" und die Basis der Subskribierenden nimmt zu.
b) Außerdem kann der Netzbetreiber Geld für das Herunterladen auf Geschäftsbasis auf Netzbetreiber-Serviceprovider-Vereinbarungen verdienen. Außerdem kann der Netzbetreiber Geld verdienen an Gebühren für die Bewirkung (hosting) der Gruppen.
c) Die Netzbetreiber sparen Geld, weil sie keine komplexe Push Proxy-Infrastruktur entwickeln müssen (wie für E-Mail-Anwendungen), sie mitbenutzen gerade vorhandene PoC-Ausrüstung für das Terminieren von Medien wie Text (E-Mail-Stil-Medien) oder anderen Medien.
d) Der Nutzen für den Kunden: Einfachheit des Verfahrens. Es besteht kein Grund mehr für das Konfigurieren von weiteren Klienten wie POP3. Verbesserung der Kundenzufriedenheit.
e) Integration in Office-Anwendungen von Kunden Dritter ist möglich. Einfach anzupassen, z.B. Outlook-Verteilerlisten mit PoC-Gruppenlistenmanagementfunktionen.
f) Der Netzbetreiber könnte unterschiedliche Dritt-Chatgruppen basierend auf Subskription anbieten. Zum Beispiel könnte der Netzbetreiber Bilder-Chat anbieten, der wegen der verwendeten höheren Bandbreite teurer als einfacher Text-Chat über PoC-Träger ist.

Ein Ausführungsbeispiel der Erfindung wird anhand der Zeichnungen näher beschrieben.
Figur 1 zeigt schematisch die Architektur des erfindungsgemäßen Push to Talk Systems.
Figur 2 zeigt einen Verfahrensablauf eines ersten erfindungsgemäßen Dienstebeispiels.
Figur 3 zeigt einen Verfahrenablauf eines zweiten erfindungsgemäßen Dienstebeispiels.

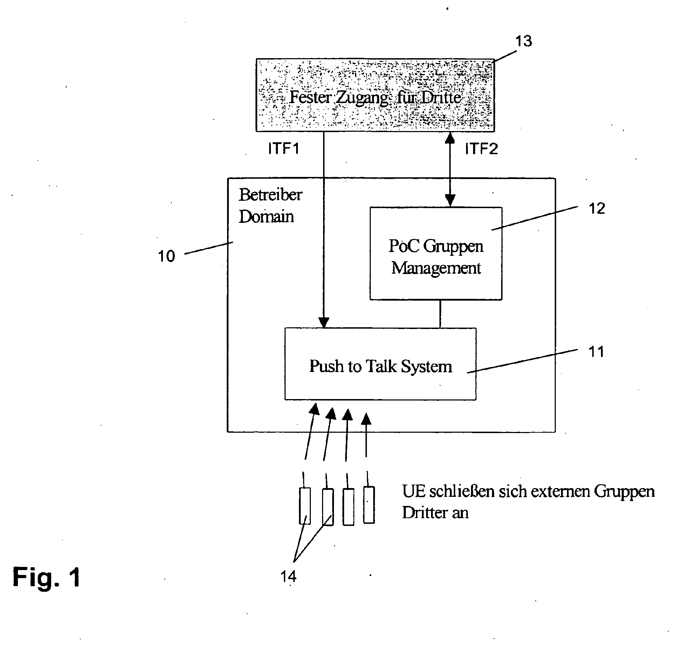

Fig. 1 zeigt vereinfacht die Architektur des erfindungsgemäßen Push to Talk Systems.
1) Die Netzbetreiber-Domain 10 umfasst eine Teilnehmerbasis, bestehend aus einem PoC-System 11 und einem PoC-Gruppenmanagement System 12. Über das PoC System können verschiedene Teilnehmer mittels PoC Endgeräten 14 in verschiedenen PoC Gruppen subskribieren.
2) Der Netzbetreiber 10 muss zwei neue Schnittstellen bereitstellen für den Zugang von Dritten 13:
   - Eine erste Schnittstelle ITF1, um externen Diensteanbietern das Einrichten von Kunden auf Subskriptionsbasis in Join-In ChatGruppen zu ermöglichen. Diese Schnittstelle wird auch zur Synchronisation von Office Anwendungen mit dem PoC-Gruppenmanagementsystem 12 verwendet.
   - Eine zweite Schnittstelle ITF2, um Medieninhalte zu terminieren in Abhängigkeit der Teilnehmer der Chat Gruppe (insbesondere Text wie z.B. Email-ähnliche Medien)
   - Neue Medien-basierte Subkriptionen. UNTERNEHMEN 2 oder andere könnten die Kunden unterscheiden auf der Grundlage der Mediensubskriptionen
   - Eine neue Medien-basierte Subskription muss im PoC-System 11 geprüft werden.
   - Neue Medien-basierte Gruppen müssen im PoC-System 11 implementiert werden.
   - Bewertungsmöglichkeiten der Medien müssen in die PoC-Endgeräte 14 integriert werden. Die Endgeräte 14 müssen Mittel anbieten, um Medien zu bewerten und sich mit speziellen Medienparametern einzuloggen.
   - Das UNI Protokoll (User Network Interface) muss angepasst werden, um Medieninformationen während des Gruppen-Logons zu unterstützen. Beim UNI handelt es sich um eine Schnittstelle zwischen einer Endeinrichtung bzw. Endgeräteanpassung und dem Netzanschluss.
3) Der Netzbetreiber 10 muss zusätzliche Funktionen für den Zugang durch Dritte 13 bereitstellen für Authentifizierung, Teilnehmervergebührung und Abrechung zwischen Diensteanbietern und Netzbetreiber.
4) Die Schnittstelle zum PoC-Gruppenmanagementsystem 12 muss angepasst werden. Die Subskription wird erweitert auf Subskriptionen für Medien.
5) Die Schnittstelle zum Push-to-Talk-System 11 muss erweitert werden. Es muss die Möglichkeit geben, Gruppen-MSISDNn in vernünftiger Weise zu extrahieren.

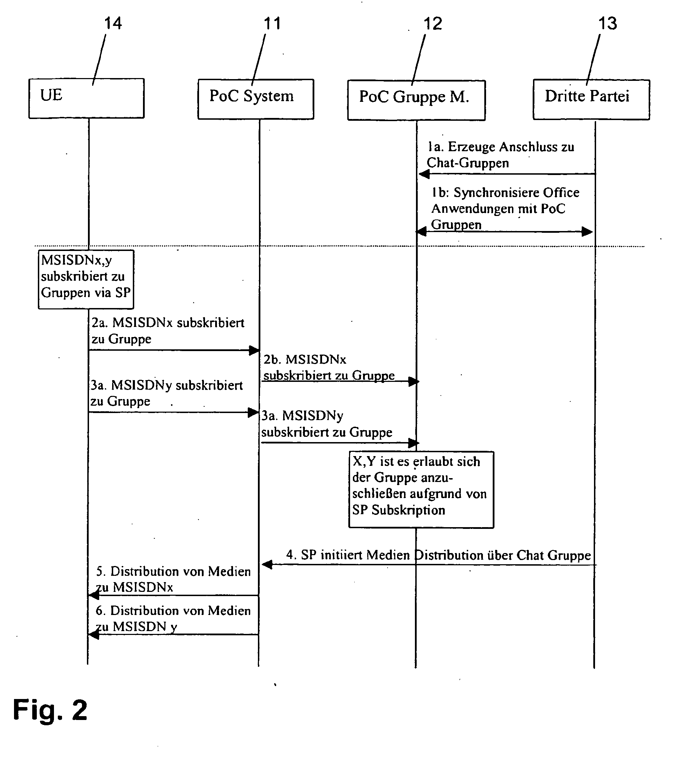

Figur 2 zeigt ein erstes Beispiel für den erfindungsgemäßen PoC Dienst. Folgende Schritte sind in Figur 2 dargestellt:
1. Eine Dritte Partei (Serviceprovider) 13 schafft viele neue Join-In-Gruppen (Poc Gruppen), beispielsweise Klingeltöne, animierte Bilder usw. und übermittelt die Gruppennamen über Website oder Werbungen an potentielle Teilnehmer. Mobilfunkteilnehmer mit den Mobilfunkrufnummern MSISDN x und MSISDN y subskribieren die PoC Gruppen und bekommen durch ihr Endgerät 14 Zugang über den Dritten zu diesen PoC Gruppen. Außerdem synchronisiert der Dritte 13 seine Office-Anwendung mit dem PoC-Gruppenmanagementsystem 12.
2. a/b. Teilnehmer (Endgerät 14) mit MSISDNx schließt sich über das PoC System 11 der Chatgruppe an
3. a/b Teilnehmer mit MSISDNy schließt sich über das PoC System 11 der Chatgruppe an; sowohl x als auch y ist es erlaubt, sich anzuschließen.
4. Der Dritte 13 verteilt neue Medien, beispielsweise E-Mail-Text, zusätzliche Medien, Anlagen, an das PoC System 11.
5. Das PoC-System 11 verteilt Medien an das Endgerät 14 mit MSISDNx unter Verwendung des PoC-Standards mit speziellen Medien.
6. Das PoC-System verteilt Medien an MSISDNy unter Verwendung des PoC-Standards mit speziellen Medien.

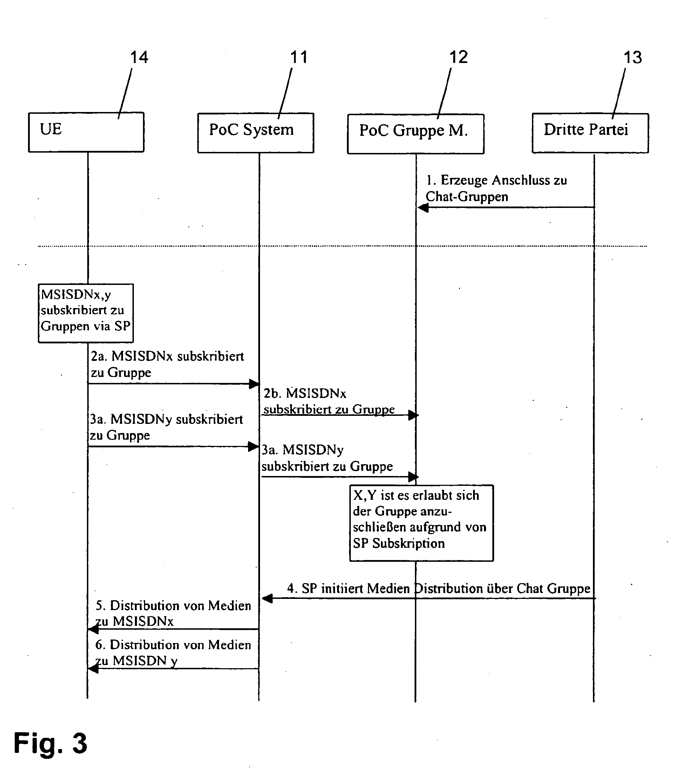

Figur 3 zeigt ein zweites Beispiel für den erfindungsgemäßen PoC Dienst. Folgende Schritte sind in Figur 3 dargestellt:
1. Eine Dritte Partei 13, z.B. ein Serviceprovider, schafft viele neue Join-In-Gruppen, beispielsweise Klingeltöne, animierte Bilder, usw., und übermittelt die Gruppennamen über Website oder Werbungen an potentielle Teilnehmer. Mobilfunkteilnehmer 14mit den Rufnummern MSISDN x und MSISDN y subskribieren die Gruppen und bekommen Zugang über den Dritten 13. Außerdem synchronisiert der Dritte seine Office-Anwendung mit dem PoC-Gruppenmanagementsystem 12.
2. a/b Der Teilnehmer mit MSISDN x schließt sich über das PoC System 11 der Chatgruppe an.
3. a/b Der Teilnehmer mit MSISDN y schließt sich über das PoC System 11 der Chatgruppe an; sowohl x als auch y ist es erlaubt, sich anzuschließen.
4. Der Dritte 13 verteilt neue Medien, z.B. E-Mail-Text, zusätzliche Medien, Anlagen, an das PoC System 11.
5. Das PoC-System 11 verteilt Medien an Teilnehmer 14 mit MSISDNx unter Verwendung des PoC-Standards mit speziellen Medien.
6. Das PoC-System verteilt Medien an Teilnehmer 10 mit MSISDNy unter Verwendung des PoC-Standards mit speziellen Medien

Das PoC System 11 kann als Ermöglichungs-System zum Transport von Medien verschiedener Art (nicht nur Stimme) verwendet werden. Die bestimmten Funktionen im PoC System 11, vor allem Gruppenverwaltung und Chatgruppen, können Dritten 13 (Serviceprovidern) angeboten werden, um Herunterladefähigkeiten und Medienverteilfähigkeiten zu liefern. Netzbetreiber 10 können PoC anbieten als Ermöglichungs-Träger basierend auf MedienSubskriptionen.

Viele andere Dienstleistungen können auf der Grundlage von PoC-Funktionalität aufgebaut werden.

## Patentansprüche

1. Verfahren zur Verwendung von Push-to-Talk-Technik, wobei eine Netzbetreiber-Domain (10) mit einer Teilnehmerbasis bestehend aus einem PoC-System (11) und einem PoC-Gruppenmanagement-System (12) bereitgestellt wird, wobei über das PoC System (11) verschiedene Teilnehmer mittels PoC Endgeräten (14) in verschiedenen PoC Gruppen subskribieren können, **gekennzeichnet durch** die Schritte: Bereitstellen einer ersten und einer zweiten Schnittstelle in der Netzbetreiber-Domain (10) für den Zugang von Dritten (13) zum PoC System (11),
Verwenden der ersten Schnittstelle, ITF1, zum Einrichten von Kunden auf Subskriptionsbasis in PoC Gruppen **durch** externe Diensteanbieter, und
Verwenden der zweiten Schnittstelle, ITF2, zum Terminieren von Medieninhalten in Abhängigkeit von den Teilnehmern der PoC Gruppe.

2. Verfahren nach Anspruch 1, **dadurch gekennzeichnet, dass** Push to Talk, PoC, als Übertragungskanal für alle Arten von Halbduplex-Kommunikation mit unterschiedlichen Medien verwendet wird.

3. Verfahren nach einem der vorhergehenden Ansprüche, **dadurch gekennzeichnet, dass** die erste Schnittstelle, ITF1, zur Synchronisation von Office Anwendungen mit dem PoC-Gruppenmanagementsystem (12) verwendet wird.

4. Verfahren nach einem der vorhergehenden Ansprüche, **dadurch gekennzeichnet, dass** PoC Endgeräte (14) Mittel bereitstellen, um Medien zu bewerten und sich mit speziellen Medienparametern beim PoC System (11) einzuloggen.

5. Verfahren nach einem der vorhergehenden Ansprüche, **dadurch gekennzeichnet, dass** das UNI Protokoll angepasst wird, um Medieninformationen während des Gruppen-Logons zu unterstützen.

6. Verfahren nach einem der vorhergehenden Ansprüche, **dadurch gekennzeichnet, dass** der Netzbetreiber (10) zusätzliche Funktionen für den Zugang durch Dritte (13) bereitstellt, für Authentifizierung, Teilnehmervergebührung und Abrechung zwischen Diensteanbietern und Netzbetreiber.

7. Verfahren nach einem der vorhergehenden Ansprüche, **dadurch gekennzeichnet, dass** die Schnittstelle zum PoC-Gruppenmanagementsystem (12) angepasst und die Subskription auf Subskriptionen für Medien erweitert wird.

8. Verfahren nach einem der vorhergehenden Ansprüche, **dadurch gekennzeichnet, dass** die Schnittstelle zum Push-to-Talk-System (11) erweitert wird, wobei die Möglichkeit geben ist, Gruppen-MSISDNn zu extrahieren.

9. Verfahren nach einem der vorhergehenden Ansprüche, **dadurch gekennzeichnet, dass** ein Dritter (13) neue Poc Gruppen schafft und die Gruppennamen an potentielle Mobilfunkteilnehmer übermittelt, dass die Mobilfunkteilnehmer die PoC Gruppen subskribieren und über ihr PoC Endgerät (14) Zugang über den Dritten (13) zu diesen PoC Gruppen erhalten, dass die Teilnehmer sich über das PoC System (11) der PoC Gruppe anschließen,
dass der Dritte (13) neue Medien, beispielsweise E-Mail-Text,
zusätzliche Medien, Anlagen, an das PoC System (11) übermittelt, dass das PoC-System (11) die neuen Medien an das PoC Endgerät (14) der Teilnehmer verteilt, unter Verwendung des PoC-Standards mit
Unterstützung von speziellen Medien.

10. Mobiles Kommunikationssystem mit Mitteln zur Durchführung des Verfahrens gemäß den Ansprüchen 1 bis 9, **gekennzeichnet durch** das Hinzufügen von zusätzlichen Komponenten, um einem vorhandenen Push-to-Talk-Dienst zu ermöglichen, Daten außer Sprache über das PoC-System (11) zu senden.

11. Mobiles Kommunikationssystem nach Anspruch 10, **dadurch gekennzeichnet, dass** eine Netzbetreiber-Domain (10) eine Teilnehmerbasis umfasst, bestehend aus einem PoC-System (11) und einem PoC-Gruppenmanagementsystem (12), wobei über das PoC System (11) verschiedene Teilnehmer mittels PoC Endgeräten (14) in verschiedene PoC Gruppen subskribieren können.

12. Mobiles Kommunikationssystem nach Anspruch 10 oder 11, **dadurch gekennzeichnet, dass** ein Zugang für Dritte (13) zum PoC System eingerichtet ist, der jeweils über eine Schnittstelle mit dem PoC System (11) und dem PoC Gruppenmanagementsystem (12) verbunden ist.

## Claims

1. Method for the use of push-to-talk technology, a network operator domain (10) with a subscriber base consisting of a PoC system (11) and a PoC group management system (12) being provided, different subscribers being able to subscribe to different PoC groups via the PoC system (11) by means of PoC terminals (14), **characterised by** the steps of:
providing first and second interfaces in the network operator domain (10) for access by third parties (13) to the PoC system (11),
using the first interface, ITF1, to set up customers on a subscription base in PoC groups through external service providers, and
using the second interface, ITF2, to schedule media contents as a function of the subscribers of the PoC group.

2. Method according to claim 1, **characterised in that** push-to-talk, PoC, is used as the transmission channel for all kinds of half-duplex communications with different media.

3. Method according to any of the preceding claims, **characterised in that** the first interface, ITF1, is used for the synchronisation of office applications with the PoC group management system (12).

4. Method according to any of the preceding claims, **characterised in that** PoC terminals (14) provide means for evaluating media and for logging in to the PoC system (11) with special media parameters.

5. Method according to any of the preceding claims, **characterised in that** the UNI protocol is adapted to support media information during group logon.

6. Method according to any of the preceding claims, **characterised in that** the network operator (10) provides additional functions for access by third parties (13), for authentication, subscriber charging and accounting between service providers and network operator.

7. Method according to any of the preceding claims, **characterised in that** the interface with the PoC group management system (12) is adapted and the subscription is extended to subscriptions for media.

8. Method according to any of the preceding claims, **characterised in that** the interface with the push-to-talk system (11) is extended, the possibility of extracting group MSISDNs being provided.

9. Method according to any of the preceding claims, **characterised in that** a third party (13) creates new PoC groups and conveys the group names to potential mobile telephone subscribers, **in that** the mobile telephone subscribers subscribe to the PoC groups and gain access to these PoC groups via their PoC terminal (14) via the third party (13), **in that** the subscribers join in the PoC group via the PoC system (11),
**in that** the third party (13) sends new media, for example e-mail text, additional media, attachments, to the PoC system (11),
**in that** the PoC system (11) distributes the new media to the PoC terminal (14) of the subscribers, using the PoC standard with the support of special media.

10. Mobile communications system with means for carrying out the method according to claims 1 to 9, **characterised by** the addition of additional components to enable an existing push-to-talk service to send data apart from speech via the PoC system (11).

11. Mobile communications system according to claim 10, **characterised in that** a network operator domain (10) comprises a subscriber base, consisting of a PoC system (11) and a PoC group management system (12), different subscribers being able to subscribe to different PoC groups via the PoC system (11) by means of PoC terminals (14).

12. Mobile communications system according to claim 10 or 11, **characterised in that** access for third parties (13) to the PoC system is set up, which is in each case connected by an interface to the PoC system (11) and the PoC group management system (12).

## Revendications

1. Procédé pour utiliser la technique Push-to-Talk ou messagerie vocale instantanée (PoC), selon lequel il est prévu un domaine d'opérateur de réseau (10) avec une base d'abonné composée d'un système PoC (11) et d'un système de gestion groupée PoC (12), et par l'intermédiaire du système PoC (11) différents abonnés peuvent s'abonner à l'aide de terminaux de PoC (14) dans différents groupes de PoC, **caractérisé par** les étapes suivantes :
préparation d'une première et d'une seconde interface dans le domaine d'opérateur (10) pour l'accès de tiers (13) au système PoC (11),
utilisation de la première interface, ITF1, pour installer des clients, sur la base d'un abonnement, dans des groupes PoC grâce à des fournisseurs de services externes, et
utilisation de la seconde interface, ITF2, pour fixer des contenus de média en fonction des abonnés du groupe PoC.

2. Procédé selon la revendication 1, **caractérisé en ce que** le service PoC est utilisé comme canal de transmission pour tous les types de communication en semi-duplex avec différents médias.

3. Procédé selon l'une des revendications précédentes, **caractérisé en ce que** la première interface, ITF1, est utilisée pour la synchronisation d'applications Office avec le système de gestion groupée PoC (12).

4. Procédé selon l'une des revendications précédentes, **caractérisé en ce qu'**il comprend l'étape qui consiste à prévoir des terminaux PoC (14) pour évaluer des médias et ouvrir une session avec des paramètres de médias spécifiques auprès du système PoC (11).

5. Procédé selon l'une des revendications précédentes, **caractérisé en ce que** le protocole UNI est adapté pour supporter des informations de média pendant l'ouverture de session de groupe.

6. Procédé selon l'une des revendications précédentes, **caractérisé en ce que** l'opérateur de réseau (10) prépare des fonctions supplémentaires pour l'accès par des tiers (13), pour l'authentification, la facturation d'abonnés et le règlement de compte entre fournisseurs de services et opérateur de réseau.

7. Procédé selon l'une des revendications précédentes, **caractérisé en ce que** l'interface avec le système de gestion groupée PoC (12) est adaptée et étend l'abonnement à des abonnements pour des médias.

8. Procédé selon l'une des revendications précédentes, **caractérisé en ce que** l'interface avec le système PoC (11) est étendue, ce qui donne la possibilité d'extraire des MSISDN de groupe.

9. Procédé selon l'une des revendications précédentes, **caractérisé en ce qu'**un tiers (13) crée des nouveaux groupes PoC et transmet les noms des groupes à des abonnés mobiles potentiels, **en ce que** les abonnés mobiles s'abonnent aux groupes PoC et ont accès grâce à leur terminal PoC (14), par l'intermédiaire du tiers (13), à ces groupes PoC, **en ce que** les abonnés se connectent par l'intermédiaire du système PoC (11) du groupe PoC, **en ce que** le tiers (13) transmet des nouveaux médias, par exemple un texte par courrier électronique, des médias supplémentaires, des pièces jointes, au système PoC (11), **en ce que** le système PoC (11) délivre les nouveaux médias au terminal PoC (14) des abonnés en utilisant le standard PoC avec le support de médias spécifiques.

10. Système de communication mobile avec des moyens pour la mise en oeuvre du procédé selon les revendications 1 à 9, **caractérisé par** l'adjonction de composants supplémentaires afin de permettre à un service Push to Talk existant d'envoyer des données autres que des données vocales par l'intermédiaire du système PoC (11).

11. Système de communication mobile selon la revendication 10, **caractérisé en ce qu'**un domaine d'opérateur de réseau (10) comprend une base d'abonnés composée d'un système PoC (11) et d'un système de gestion groupée PoC (12), étant précisé que par l'intermédiaire du système PoC (11), différents abonnés peuvent s'abonner à l'aide de terminaux de PoC (14) dans différents groupes de PoC

12. Système de communication mobile selon la revendication 10 ou 11, **caractérisé en ce qu'**il est prévu un accès au système PoC pour des tiers (13), qui est relié par une interface audit système (11) et au système de gestion groupée PoC (12).
